(19) Europäisches Patentamt

European Patent Office

Office européen des brevets

(11) **EP 0 970 862 B1**

(12) **EUROPÄISCHE PATENTSCHRIFT**

(45) Veröffentlichungstag und Bekanntmachung des Hinweises auf die Patenterteilung:
**10.08.2005  Patentblatt 2005/32**

(51) Int Cl.⁷: **B60T 13/66**, B60T 13/68, B60T 13/58, B60T 8/00, B60T 7/04, B60T 7/12

(21) Anmeldenummer: **99111847.2**

(22) Anmeldetag: **19.06.1999**

(54) **Verfahren zur Bildung eines Verzögerungssollwerts eines Kraftfahrzeugs**

Method for establishing a motor vehicle deceleration setpoint value

Méthode de formation d'une valeur de consigne de décélération d'un véhicule automobile

(84) Benannte Vertragsstaaten:
**FR GB IT NL SE**

(30) Priorität: **10.07.1998  DE 19831070**

(43) Veröffentlichungstag der Anmeldung:
**12.01.2000  Patentblatt 2000/02**

(73) Patentinhaber: **DaimlerChrysler AG**
**70567 Stuttgart (DE)**

(72) Erfinder:
• **Fischer, Jörg**
**73733 Esslingen (DE)**
• **Reiner, Michael**
**70736 Fellbach (DE)**

(56) Entgegenhaltungen:
EP-A- 0 136 689    EP-A- 0 442 050
EP-A- 0 867 349    DE-A- 3 226 074
DE-A- 19 615 805   DE-C- 4 332 838
US-A- 5 496 098

## Beschreibung

Die Erfindung betrifft ein Verfahren zur Bildung eines Verzögerungssollwerts eines Kraftfahrzeugs mit einer insbesondere druckluftbetätigten, elektropneumatischen Bremse und mit wenigstens einer Einrichtung zur Betätigung der Bremse unabhängig vom Fahrerwunsch (externe Betätigung).

Eine elektronisch geregelte Druckmittelbremseinrichtung für Kraftfahrzeuge geht beispielsweise aus der DE 38 18 617 C2, der DE 40 04 502 C2, und der DE 38 29 951 A1 hervor.

Die DE 40 07 360 C2 offenbart ein Verfahren zur Bremsdruckverteilung auf die Achsen eines Kraftfahrzeugs mit einer ABS-Druckmittelbremse.

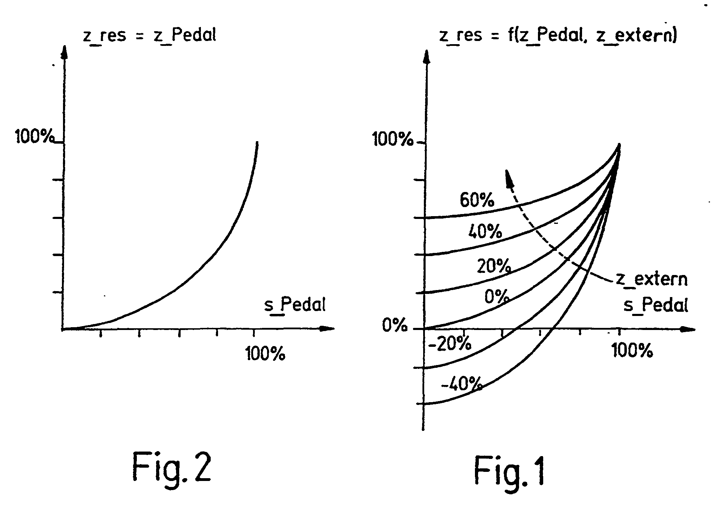

Ferner ist für Nutzfahrzeuge mit elektropneumatischen Bremsen eine Verzögerungsregelung bekannt, bei der einem Bremspedalweg ein Verzögerungssollwert mit progressiver Kennlinie zugeordnet ist, wie es in Fig. 2 schematisch dargestellt ist.

Aus der DE 195 26 659 A1 ist ein Verfahren und eine Vorrichtung zur Steuerung der Bremsanlage eines Fahrzeugs bekannt, bei welcher wenigstens während einer Panikbremsung abhängig vom Betätigungssignal des Bremspedals und dessen Gradienten eine Sollverzögerung vorgegeben wird, die über einen Regler durch Beeinflussung der Radbremsen, gegebenenfalls radindividuell, eingehalten wird. Hierbei hat der Fahrer in jeder Betriebssituation, auch in Betriebssituationen mit vom Fahrer ausgelöster automatischer Bremsung, Einfluß auf die Fahrzeugverzögerung.

Eine Betätigungseinheit für eine elektronisch gesteuerte Fahrzeugbremsanlage geht aus der DE 196 38 102 C1 hervor. Diese weist einen durch ein Bremspedal betätigbaren Bremskraftverstärker, der einen Hauptbremszylinder und ein Reservoir für Hydraulikfluid auf, eine mit wenigstens einem ersten Fahrzeugrad gekoppelte erste Bremseinrichtung, die durch eine elektronisch gesteuerte erste Ventilanordnung in einer Grundstellung mit dem Hauptbremszylinder verbindbar oder in einer Betätigungsstellung von diesem trennbar ist, eine mit dem Hauptbremszylinder verbindbare Einrichtung zur Simulation des Bremspedalverhaltens, die eine zur Wirkung gegen den Hydraulikdruck aus dem Hauptbremszylinder eingerichtete Federanordnung aufweist, und der eine Charakteristik-Moduliereinrichtung zugeordnet ist. Auf diese Weise soll das dem Fahrer dargebotene Bremspedalgefühl auf aus herkömmlichen Fahrzeugbremsanlagen bekannte Weise modelliert werden.

Aus der DE 195 24 228 A1 geht eine Fahrzeugbremsanlage mit einer Rekuperationsbremse hervor, bei der die Rekuperationsbremse so ausgebildet ist, daß einerseits stets eine feste Beziehung zwischen dem Pedalweg und der Bremswirkung gegeben ist und andererseits das Auftreten eines Fehlers in der Rekuperationsbremse kompensierbar ist. Dies wird dadurch erreicht, daß eine durchgehende mechanisch-hydraulische Verbindung zwischen einem Bremspedal und den Radbremszylindern besteht.

Eine hydraulische Fahrzeugbremsanlage, deren normaler Betriebsbremsbetrieb unter Verwendung von hydraulischer Fremdenergie durchführbar ist, geht aus der DE 196 53 308 A1 hervor.

Eine hydraulische Hilfskraft- bzw. Fremdkraftbremsanlage für Kraftfahrzeuge ist ferner aus der DE 196 18 489 A1 bekannt.

Aus Personenkraftwagen mit hydraulischen Hilfskraftbremsanlagen ist es bekannt, Abstandsregelsysteme einzusetzen, bei denen der Abstand zum vorausfahrenden Fahrzeug mittels Sensoren erfaßt und bei Unterschreitung eines Mindestabstands die Betriebsbremsanlage des Personenkraftwagens extern betätigt wird. Dabei wird durch die externe Betätigung über den Unterdruckverstärker auch das Bremspedal bewegt. Auf diese Weise ist ein Nachtreten durch den Fahrer des Personenkraftwagens mit dem ihm bekannten Pedalgefühl möglich.

Es ist nun beabsichtigt, in Zukunft auch bei Nutzfahrzeugen Eingriffe in das Bremssystem des Fahrzeuges unabhängig von einer Betätigung des Bremspedals zu ermöglichen, um zum Beispiel eine selbsttätige Abstandsregelung beispielsweise in Form einer mit einer Abstandsregelung gekoppelten Geschwindigkeitsregelungsvorrichtung (Abstandsregeltempomat) zu realisieren. In den bei Nutzfahrzeugen zum Einsatz kommenden Fremdkraft-Druckluftbremsanlagen ist jedoch eine Rückmeldung an den Fahrer bei einer externen Betätigung der Bremse nicht ohne weiteres möglich, so daß die Stellung des Bremspedals unverändert bleibt.

Der Erfindung liegt die Aufgabe zugrunde, ein Verfahren zur Bildung eines Verzögerungssollwerts der gattungsgemäßen Art dahingehend weiterzubilden, daß auch bei einer externen Betätigung der Bremse eine dem Fahrer geläufige Pedalcharakteristik realisierbar ist, so daß insbesondere ein bewußtes Nachtreten des Bremspedals durch den Fahrer mit dem ihm bekannten Pedalgefühl möglich ist. Das Verfahren soll dabei insbesondere bei einer in Nutzfahrzeugen verwendeten druckluftbetätigten elektropneumatischen Bremse zum Einsatz kommen.

Diese Aufgabe wird bei einem Verfahren zur Bildung eines Verzögerungssollwerts der eingangs beschriebenen Art erfindungsgemäß dadurch gelöst, daß bei externer Betätigung der Bremse und bei gleichzeitiger Veränderung der Stellung des Bremspedals ein resultierender Verzögerungssollwert so gebildet wird, daß ausgehend von dem extern eingestellten

Verzögerungssollwert bei gleichzeitiger Betätigung des Bremspedals ein Verlauf des resultierenden Verzögerungssollwerts mit dem Pedalweg realisiert wird, der bei vollem Bremspedalweg die volle Verzögerung erreicht.

Hierdurch wird auch bei externer Betätigung der Bremse und bei gleichzeitiger Betätigung des Bremspedals durch den Fahrer eine Zunahme der Verzögerung der Betätigung des Bremspedals durch den Fahrer ermöglicht. Es wird so bei externer Betätigung der Bremse ein realistisches Pedalgefühl bei einem Nachtreten des Bremspedals ermöglicht.

Vorteilhafterweise wird dabei der resultierende Verzögerungssollwert in Abhängigkeit von einem von der Pedalstellung abgeleiteten Verzögerungssollwert und von einem von der wenigstens einen Einrichtung zur externen Betätigung geforderten Verzögerungssollwert gemäß folgendem funktionalem Zusammenhang festgelegt:

A Wenn der von der Pedalstellung abgeleitete Verzögerungssollwert = 0 ist und der von der Einrichtung zur externen Betätigung geforderte Verzögerungssollwert ≠ 0 ist, dann entspricht der resultierende Verzögerungssollwert dem von der Einrichtung zur externen Betätigung geforderten Verzögerungssollwert;

B Wenn der von der Pedalstellung abgeleitete Verzögerungssollwert > 0 ist und der von der Einrichtung zur externen Betätigung geforderte Verzögerungssollwert ≠ 0 ist, dann gilt:

B1 Wenn der von der Pedalstellung abgeleitete Verzögerungssollwert bis zu einer vorgebbaren Zeitschwelle zeitlich vor oder etwa gleichzeitig mit dem von der Einrichtung zur externen Betätigung geforderten Verzögerungssollwert z_extern auftritt, folgender funktionaler Zusammenhang zwischen dem resultierenden Verzögerungssollwert (z_res), dem von der Pedalstellung abgeleiteten Verzögerungssollwert (z_Pedal) und dem von der Einrichtung zur externen Betätigung geforderten Verzögerungssollwert (z_extern):

$$z\_res[\%] = Max(z\_Pedal[\%]; Min(z\_extern[\%]; a \cdot z\_Pedal[\%]+b)),$$

wobei a, b Gewichtungsfaktoren sind, die eine Priorität zwischen Fahrerwunsch und externem System wiedergeben und

B2 für den resultierenden Verzögerungssollwert z_res der funktionale Zusammenhang

$$z\_res[\%] = z\_Pedal[\%] + z\_extern[\%] (1 - z\_Pedal[\%]/100),$$

wenn der von der Einrichtung zur externen Betätigung geforderte Verzögerungssollwert z_extern länger als eine vorgegebene Zeitschwelle vor dem von der Pedalstellung abgeleitete Verzögerungssollwert z_Pedal auftritt.

Die Zeitschwelle beträgt vorteilhafterweise 500 msec.

Es versteht sich, daß die obengenannte mathematische Funktion nur ein Ausführungsbeispiel darstellt. Die Abhängigkeit des resultierenden Verzögerungssollwerts von dem von der Pedalstellung abgeleiteten Verzögerungssollwert und dem von der Einrichtung zur externen Betätigung geforderten Verzögerungssollwert kann auch auf andere Weise definiert sein.

Durch dies Funktion ergibt sich eine Kennlinienschar, welche ein Nachführen des resultierenden Verzögerungssollwerts über eine um den von dem wenigstens einen externen System angeforderten Verzögerungssollwert (Abbremsungswunsch) verschobene Kennlinie ermöglicht. Bei einem Nutzfahrzeug wird vorteilhafterweise dabei zur Erzeugung des Verzögerungssollwerts neben der druckluftbetätigten elektropneumatischen Bremse abhängig von dem Fahr- und Beladungszustand des Fahrzeugs auch die Dauerbremse betätigt.

Bei Zugbetrieb wird dabei zur Erzeugung des Verzögerungssollwerts darüber hinaus auch die Bremse eines Anhängers oder Aufliegers betätigt.

Ferner ist vorteilhafterweise vorgesehen, daß bei Störungen und/oder wenigstens teilweisen Ausfällen der druckluftbetätigten elektropneumatischen Bremse und/oder einer Dauerbremse der von der wenigstens einen Einrichtung zur externen Betätigung angeforderte Verzögerungssollwert auf Null gesetzt wird.

Weitere Merkmale und Vorteile der Erfindung sind Gegenstand der nachfolgenden Beschreibung eines Ausführungsbeispiels anhand der Zeichnung.

In der Zeichnung zeigen:

Fig. 1 schematisch den resultierenden verzögerungssollwert über der Änderung der Pedalstellung bei einem von der Erfindung Gebrauch machenden Verfahren und
Fig. 2 den Verzögerungssollwert über der Änderung der Pedalstellung bei einem aus dem Stand der Technik bekannten Verfahren.

Ein Ausführungsbeispiel des Verfahrens wird beispielhaft anhand einer druckluftbetätigten elektropneumatischen Bremse beschrieben, wie sie bei Nutzfahrzeugen zum Einsatz kommt. Es versteht sich aber, daß das Verfahren nicht auf druckluftbetätigte elektropneumatische Bremsen beschränkt ist, sondern rein prinzipiell bei jeder Bremse, insbesondere auch bei hydraulischen Bremsanlagen, wie sie bei Personenkraftwagen eingesetzt werden, zur Anwendung kommen kann.

Wie aus Fig. 2 hervorgeht, wird bei einem Verfahren zur Bildung des Verzögerungssollwerts eines Kraftfahrzeugs mit einer druckluftbetätigten, elektropneumatischen Bremse und einer Dauerbremse mit einer zunehmenden Pedalstellungsänderung s_Pedal ein resultierender Verzögerungssollwert z_res erzeugt, der einer Parabel ähnlich einen progressiven Verlauf aufweist.

Verfügt das Fahrzeug nun über eine Einrichtung zur externen Betätigung, d.h. über eine Einrichtung zu einer Betätigung der druckluftbetätigten elektropneumatischen Bremse und/oder der Dauerbremse unabhängig vom Fahrerwunsch, beispielsweise um einen Abstandstempomaten oder dergleichen zu realisieren, so hängt der resultierende Verzögerungssollwert z_res nicht nur von der Änderung der Pedalstellung z_Pedal ab, sondern auch von dem von der wenigstens einen Einrichtung zur externen Betätigung angeforderten Sollwert z_extern. Beide Verzögerungssollwerte z_Pedal und z_extern werden zu dem resultierenden Verzögerungssollwert z_res, gemäß folgendem funktionalen Zusammenhang:

A    Wenn z_Pedal = 0 und z_extern $\neq$ 0, dann:

$$z\_res = z\_extern$$

und

B    Wenn z_Pedal > 0 und z_extern $\neq$ 0, dann gilt:

B1  Wenn z_Pedal bis zu einer vorgebbaren Zeitschwelle vor oder etwa gleichzeitig mit z_extern auftritt

$$z\_res = Max(z\_Pedal; Min(z\_extern; a \cdot z\_Pedal + b)),$$

wobei a, b Gewichtungsfaktoren sind, die eine Priorität zwischen Fahrerwunsch und externem System wiedergeben und

B2  wenn z_extern länger als die vorgegebene Zeitschwelle vor z_Pedal auftritt

$$z\_res[\%] = z\_Pedal[\%] + z\_extern[\%] (1 - z\_Pedal[\%]/100).$$

Der funktionale Zusammenhang von z_res und s_Pedal ist schematisch in Fig. 1 dargestellt. Anders als bei dem in Fig. 2 dargestellten Zusammenhang zwischen z_res und s_Pedal ermöglicht der in Fig. 1 dargestellte resultierende Verzögerungssollwert z_res, der sowohl von z_Pedal als auch von z_extern abhängt, bei jedem von der weiteren Einrichtung zur externen Betätigung angeforderten Verzögerungssollwert z_extern eine Änderung des resultierenden Verzögerungssollwerts z_res in Abhängigkeit von der Pedalstellung s_Pedal und damit von dem von der Pedalstellung abgeleiteten Verzögerungssollwert z_Pedal. Auf diese Weise führt beispielsweise ein Nachtreten des Fahrers zu einer Erhöhung des resultierenden Verzögerungssollwerts z_res.

Wie in Fig. 1 ferner dargestellt ist, ist es bei Fahrten im Gefälle auch möglich, daß der von der weiteren Einrichtung zur externen Betätigung geforderte Verzögerungssollwert z_extern auch < 0 wird und damit ein resultierender Verzögerungssollwert z_res resultiert der ebenfalls < 0 ist. In diesem Falle wird das Fahrzeug kontrolliert beschleunigt.

Neben der Betätigung der druckluftbetätigten elektropneumatischen Bremse wird auch eine Betätigung der Dauerbremse des Fahrzeugs sowie bei einem Betrieb des Fahrzeugs als Zugfahrzeug eine Betätigung der Bremse des Anhängerfahrzeugs oder eines Aufliegers vorgenommen.

Bei einem Ausfall der Betriebs- oder Dauerbremse wird z_extern auf 0 gesetzt.

**Patentansprüche**

1. Verfahren zur Bildung eines Verzögerungssollwerts eines Kraftfahrzeugs mit einer durch ein Bremspedal betätigbaren Bremse und mit wenigstens einer Einrichtung zur externen Betätigung der Bremse unabhängig vom Fahrerbremswunsch,
**dadurch gekennzeichnet,**
**dass** bei einer Betätigung der Bremse mittels der Einrichtung zur externen Betätigung der Bremse und bei gleichzeitiger Veränderung der Bremspedalstellung ein resultierender Verzögerungssollwert (z_res) so gebildet wird, dass ausgehend von dem durch die Einrichtung zur externen Betätigung der Bremse eingestellten Verzögerungssollwert (z_extern) bei gleichzeitiger Betätigung des Bremspedals ein Verlauf des resultierenden Verzögerungssollwerts (z_res) mit dem Pedalweg realisiert wird, der bei vollem Bremspedalweg die volle Verzögerung erreicht.

2. Verfahren nach Anspruch 1,
**dadurch gekennzeichnet,**
**dass** die Änderung des resultierenden Verzögerungssollwerts (z_res) in Abhängigkeit von einem der Pedalstellung abgeleiteten Verzögerungssollwert (z_Pedal) und von einem von der Einrichtung zur externen Betätigung angeforderten Verzögerungssollwert (z_extern) gemäß folgendem funktionalen Zusammenhang festgelegt wird:

A        Wenn z_Pedal = 0 und z_extern ≠ 0, dann

$$z\_res = z\_extern$$

und

B        Wenn z_Pedal > 0 und z_extern ≠ 0, dann gilt

     B1    Wenn z_Pedal bis zu einer vorgebbaren Zeitschwelle vor oder etwa gleichzeitig mit z_extern auftritt

$$z\_res = Max(z\_Pedal; Min(z\_extern; a·z\_Pedal + b)),$$

          wobei a, b Gewichtungsfaktoren sind, die eine Priorität zwischen Fahrerwunsch und externem System wiedergeben und

     B2    wenn z_extern länger als die vorgegebene Zeitschwelle vor z_Pedal auftritt

$$z\_res[\%] = z\_Pedal[\%] + z\_extern[\%] \; (1 - z\_Pedal[\%]/100).$$

3. Verfahren nach Anspruch 2,
**dadurch gekennzeichnet,**
**dass** die Zeitschwelle 500 msec beträgt.

4. Verfahren nach einem der Ansprüche 1 bis 3,
**dadurch gekennzeichnet,**
**dass** zur Erzeugung des resultierenden Verzögerungssollwertes neben der druckluftbetätigten, elektropneumatischen Bremse eine Dauerbremse des Fahrzeugs abhängig vom Fahr- und Beladungszustand des Fahrzeug betätigt wird.

5. Verfahren nach einem der Ansprüche 1 bis 4,
**dadurch gekennzeichnet,**
**dass** zur Erzeugung des resultierenden Verzögerungssollwertes (z_res) zusätzlich auch die Bremse eines Anhängers oder Aufliegers betätigt wird.

6. Verfahren nach Anspruch 4 oder 5,
**dadurch gekennzeichnet,**

## EP 0 970 862 B1

**dass** bei einem wenigstens teilweisen Ausfall der druckluftbetätigten, elektropneumatischen Bremse und/oder der Dauerbremse der von der externen Einrichtung angeforderte Verzögerungssollwert (z_extern) auf Null gesetzt wird.

**Claims**

1. Method for the formation of a set deceleration value of a motor vehicle with a brake operated by a brake pedal and with at least one device for the external actuation of the brake independent of the braking intentions of the driver, **characterised in that**,
if a brake is actuated by means of the device for the external actuation of the brake while the position of the brake pedal is simultaneously altered, a resulting set deceleration value (z_res) is so formed that, starting from the set deceleration value (z_external) set by the device for the external actuation of the brake, the course of the resulting set deceleration value (z_res) so corresponds to the pedal travel if the brake pedal is operated simultaneously that full deceleration is reached at full brake pedal travel.

2. Method according to claim 1,
**characterised in that**
the change of the resulting set deceleration value (z_res) is determined in dependence on a set deceleration value derived from the pedal position (z_pedal) and on a set deceleration value (z_external) requested by the device for the external actuation of the brake in accordance with the following functional interrelationship:

   A        If $z\_pedal = 0$ and $z\_external \neq 0$,

$$Z\_res = z\_external,$$

   and
   If $z\_pedal > 0$ and $z\_external \neq 0$, the following applies:

   B1    If z_pedal, up to a presettable time threshold, occurs before or approximately simultaneously with z_external,

$$z\_res = max(z\_pedal); min(z\_external; a.z\_pedal + b)),$$

   wherein a, b are weighting factors representing a priority between driver intentions and external system, and

   B2    If z_external occurs before z_pedal by more than the preset time threshold,

$$z\_res\ [\%] = z\_pedal\ [\%] + z\_external\ [\%]\ (1 - z\_pedal\ [\%]/100).$$

3. Method according to claim 2,
**characterised in that**
the time threshold is 500 msec.

4. Method according to any of claims 1 to 3,
**characterised in that**,
to generate the resulting set deceleration value, an auxiliary brake retarder of the vehicle is used in dependence on the driving and loading state of the vehicle in addition to the air-operated electropneumatic brake.

5. Method according to any of claims 1 to 4,
**characterised in that**,
to generate the resulting set deceleration value (z_res), the brake of a trailer or semitrailer is used in addition.

6. Method according to claim 4 or 5,
**characterised in that**,

6

at an at least partial failure of the air-operated electropneumatic brake and/or of the auxiliary brake retarder, the set deceleration value (z_external) requested by the external device is set to zero.

**Revendications**

1. Procédé pour la formation d'une valeur de consigne de décélération d'un véhicule automobile avec un frein pouvant être actionné par une pédale de frein et avec au moins un appareil pour l'actionnement externe du frein indépendamment du souhait de freinage du conducteur, **caractérisé en ce que** lors d'une commande du frein au moyen de l'appareil pour l'actionnement externe du frein et dans le cas d'une modification simultanée de la position de la pédale de frein, on forme une valeur de consigne de décélération résultante (z_res) de telle sorte que, à partir de la valeur de consigne de décélération (z_extern) réglée par l'appareil pour l'actionnement externe du frein, on réalise avec l'actionnement simultané de la pédale de frein une courbe de la valeur de consigne de décélération résultante (z_res) avec la course de pédale, qui atteint la décélération complète avec la course complète de la pédale de frein.

2. Procédé selon la revendication 1, **caractérisé en ce que** la variation de la valeur de consigne de décélération résultante (z_res) est fixée en fonction d'une valeur de consigne de décélération (z_Pedal) dérivée de la position de la pédale et d'une valeur de consigne de décélération (z_extern) demandée par l'appareil pour l'actionnement externe selon la relation fonctionnelle suivante :

   A          si z_Pedal = 0 et z_extern ≠ 0, alors

   $$z\_res = z\_extern$$

   et

   B          si z_Pedal > 0 et z_extern ≠ 0, alors on a

   B1      si z_Pedal apparaît jusqu'à un seuil de temps prédéfinissable avant ou à peu près en même temps que z_extern

   $$z\_res = Max(z\_Pedal; Min(z\_extern ; a \cdot z\_Pedal + b)),$$

   a, b étant des facteurs de pondération qui représentent une priorité entre le souhait du conducteur et le système externe et

   B2      si z_extern apparaît plus longtemps que le seuil de temps prédéfini avant z_Pedal

   $$z\_res[\%] = z\_Pedal[\%] + z\_extern[\%] (1 - z\_Pedal[\%]/100).$$

3. Procédé selon la revendication 2, **caractérisé en ce que** le seuil de temps est de 500 msec.

4. Procédé selon l'une quelconque des revendications 1 à 3, **caractérisé en ce que**, pour générer la valeur de consigne de décélération résultante, on actionne parallèlement au frein électropneumatique et actionné par air comprimé un frein continu du véhicule en fonction de l'état de conduite et de chargement du véhicule.

5. Procédé selon l'une quelconque des revendications 1 à 4, **caractérisé en ce que**, pour générer la valeur de consigne de décélération résultante (z_res), on actionne en supplément également le frein d'une remorque ou d'un semi-remorque.

6. Procédé selon la revendication 4 ou 5, **caractérisé en ce que** dans le cas d'une défaillance au moins partielle du frein électropneumatique et actionné par air comprimé et/ou du frein continu, la valeur de consigne de décélération (z_extern) demandée par l'appareil externe est placée sur zéro.

z_res = z_Pedal

100%

s_Pedal

100%

## Fig. 2

z_res = f(z_Pedal, z_extern)

100%

60%

40%

20%

0%

0%

-20%

-40%

z_extern

s_Pedal

100%

## Fig. 1